# FASCICULE DE BREVET EUROPEEN

(11) **EP 0 546 968 B1**
(45) Date de publication et mention de la délivrance du brevet: **16.04.1997**
(21) Numéro de dépôt: 92430035.3
(22) Date de dépôt: 10.12.1992
(51) Int. Cl.: G07F 9/10, G07F 11/58, A47J 39/00

(54) **Dispositif de distribution de plateaux-repas avec réfrigération et système d'introduction ou d'évacuation des plateaux et système de fermeture du module technique**
Tiefkühl-Fertiggericht-Tablettausgabevorrichtung, Tabletteinführ- und -entnahmesystem, und System zum Schliessen des technischen Moduls
Refrigerated meal-trays-distribution device, tray introduction and removal system and closure system for the technical unit

(30) Priorité: 12.12.1991 FR 9115573
(43) Date de publication de la demande: 16.06.1993
(73) Titulaire: Grandi, René, F-38300 Ruy (FR)
(72) Inventeur: Grandi, René, F-38300 Ruy (FR)
(74) Mandataire: Roman, Michel

(56) Documents cités:
- EP-A- 0 339 806
- WO-A-86/04706
- WO-A-90/15536
- CH-A- 585 444
- FR-A- 656 285
- FR-A- 2 474 852
- US-A- 3 162 494
- US-A- 4 687 119
- US-A- 4 783 582

## Description

Dispositif de distribution de plateau-repas avec système d'introduction et d'évacuation des plateaux dans un module thermique contenant des mâchoires de fermeture.

Il est destiné à améliorer et à simplifier la fermeture du module thermique ou four de cuisson, ainsi qu'à simplifier le système de mouvement du plateau. Enfin il permet une économie dans les moyens de sa mise en oeuvre.

Les systèmes déjà décrits et connus nécessitent une timonerie onéreuse et compliquée pour la fonction d'entrée et de sortie du plateau. Quant aux fermetures des modules thermiques, ceux-ci ont des déperditions de calories, notamment pour ce qui concerne les micro-ondes, où ont été constatées de nombreuses pertes des ondes.

On peut citer à titre d'exemple les brevets N° WO-A-90 15 536 (GRANDI) et EP-A-0 339 806 (JUILLET).

Le premier de ces documents concerne un dispositif destiné à réchauffer et distribuer des plats cuisinés disposés sur un plateau-repas et stockés en attente dans une enceinte réfrigérée, chaque plateau pouvant comporter des denrées différentes et étant sélectionnables par le consommateur. La remise en température s'effectue par un four coulissant grâce à une vis sans fin à billes et deux glissières, pour se positionner face au plateau sélectionné. Dans l'enceinte réfrigérée, les plateaux sont gerbés sur des étagères à glissières. Une vis sans fin fait coulisser un arbre à cames muni d'ergots, pour actionner le mécanisme de mouvement du plateau choisi, l'arbre à cames effectuant alors une rotation pour actionner les timoneries à biellettes du mécanisme faisant ainsi glisser le plateau dans le four ou hors de ce dernier.

Quant au second document, il décrit un distributeur automatique de plats chauds comprenant des piles de plateaux contenant des aliments, un four à micro-ondes apte à contenir l'un de ces plateaux et dont la hauteur est de préférence telle que soit produite une cavité résonnante pour la longueur d'onde utilisée, des moyens étant prévus pour introduire à la demande l'un des plateaux sélectionnés dans le four. Chaque plateau comporte des instructions de chauffage en code lisible par la machine, constituées par exemple de perforations effectuées sur les rebords latéraux des plateaux, une tête de lecture lisant ces instructions pour adapter le réglage du four à chaque plateau. Les piles de plateaux peuvent être situées dans un magasin rotatif et sélectionnés par boutons poussoirs.

Le dispositif selon l'invention, est defini par les caractéristiques de la revendication 1. L'exemple de réalisation préféré se présente sous la forme d'une armoire de distribution ou un chariot de distribution roulant, comportant une enceinte réfrigérée dans laquelle des plateaux-repas sont gerbés, et dont les rebords reposent sur les pales de vis sans fin ou des taquets, qui serviront à leur élévation pour le traitement d'une partie du plateau en chaud. La totalité des produits disposés sur ce plateau restent réfrigérés, puis une partie seulement comme le plat principal sera cuit ou réchauffé.

Dans sa partie supérieure et opposée, l'enceinte comporte également un module thermique équipé d'un magnétron à micro-ondes ou même de toute autre énergie rapide. Ce module thermique peut comporter plusieurs types de moyens de chauffe différents, notamment pour les produits tels que pizzas, croque-monsieur ou autres où des rampes à infra-rouges des lampes halogènes avec humidificateurs vapeur thermique sont plus adaptés.

A l'intérieur de ce module thermique des mâchoires motorisées comportant des pignons d'entraînement, s'ouvrent et se ferment pour laisser pénétrer et sortir, uniquement la partie du plateau à réchauffer. L'autre partie du plateau contenant les produits, tels que hors-d'oeuvre, fromages, fruits, etc... reste toujours en zone réfrigérée.

Sur la paroi inférieure et extérieure du module thermique, une crémaillère également motorisée et comportant un électro-aimant vient contacter une pièce métallique située sous le plateau, au moyen d'un micro-contact placé sur une roulette à cames de la crémaillère et qui déterminera le passage du courant électrique pour l'ouverture ou fermeture du contact de l'électro-aimant au plateau et lui permettre avec la crémaillère, le déplacement d'introduction et d'évacuation dans le module thermique et également sa sortie hors de l'enceinte.

Le micro-contact déterminera également le passage du courant électrique à deux butées de sécurité situées aux extrémités, de part et d'autre de la crémaillère. Ce contact évaluera d'un côté, la commande de fermeture ou d'ouverture des mâchoires du module thermique, et de l'autre côté le dégagement du plateau lors de son extraction hors du dispositif. Les mâchoires du module thermique étant synchronisées avec le mouvement de la crémaillère, viennent se fermer uniquement sur la partie du plateau contenant les aliments à cuire ou à réchauffer.

Une fois la fonction de chauffe étant terminée, les mâchoires s'ouvrent et la crémaillère fait marche arrière, retire le plateau et le conduit jusqu'à une desserte extérieure.

Ces deux mâchoires (supérieure et inférieure) viennent s'insérer et s'imbriquer dans des encoches adéquates, situées sur le plateau. Ces mâchoires doivent se jointer très hermétiquement, entre elles, sur et sous le plateau, pour éviter toute fuite lors de l'utilisation du micro-ondes.

La synchronisation des mâchoires de la crémaillère électro-aimant et micro-contact est commandée aux moteurs par le temps de chauffe des produits qui est mis en mémoire et déterminé électroniquement ou manuellement sur un pupitre extérieur au moment du chargement des plateaux.

Toutefois d'autres dispositifs équivalents à la crémaillère peuvent être envisagés pour l'introduction et l'évacuation des plateaux, tels que une chaîne placée horizontalement ou bien une vis à bille etc... Tous sont actionnés par un moteur et synchronisés avec l'ouverture ou fermeture des mâchoires du module technique. Ces exemples sont donnés à titre non limitatif.

Des billes latérales de guidage, situées sur les parois latérales et uniquement pour le dernier plateau supérieur, maintiennent ce dernier et lui permettent un meilleur coulissement lors de sa sortie hors de l'enceinte pour la consommation des produits contenus.

Le module thermique comporte une turbine permettant d'évacuer les calories dégagées par la remise en température, à cet effet les parois du dispositif entourant le module thermique présente des grilles d'aération. Les parois entourant le dispositif sont fortement isolées.

Le module thermique de cuisson étant fixe dans sa positon haute, chaque plateau soit être élevé à son niveau afin de pouvoir être saisi et transporté dans le module thermique par la crémaillère. Cette montée peut être effectuée par des vis sans fin motorisées, deux de chaque côté, et sont situées de part et d'autre du plateau.

Tout autre système peut également être envisagé comme un double ensemble de poulies de contre-poids et de courroies crantées comportant des taquets saisissant les plateaux pour leur élévation.

Chacun des systèmes est synchronisé avec l'évacuation de chaque plateau pour permettre la montée du plateau suivant.

La réfrigération s'effectue par un compresseur de froid qui au moyen d'une turbine envoie le froid par une bouche supérieure située à travers la paroi séparant la pile de plateaux et la zone productrice de froid. Cet air est repris par une autre bouche inférieure et est recyclé et refroidi dans un évaporateur, puis renvoyé dans la zone des plateaux.

D'autre part, pour obtenir une plus grande capacité de distribution, le dispositif peut être présenté avec une double colonne de gerbage des plateaux, ou même voire plusieurs colonnes. Mais pour ne pas alourdir le prix de revient, ni le poids de l'appareil qui est de préférence roulant, un seul module thermique pourra asservir l'ensemble des colonnes.

Pour ce faire, le module thermique chauffant à micro-ondes se déplace transversalement d'une colonne à l'autre, soit manuellement par une poignée, soit de façon motorisée. Des guides coulisseaux situés aux quatre angles du module thermique facilitent son transfert.

Cela permet ainsi de faire la gestion de plusieurs colonnes de plateaux, suivant le positionnement du module thermique. Il convient également pour cette option de double capacité, de construire le module thermique chauffant surélevé au-dessus de la paroi supérieure, afin de faciliter le mouvement du module thermique et avoir plus de capacité dans le gerbage des plateaux.

Cette option étant plus spécifique en armoire de distribution insérée dans une chaîne "Self service" pour le service journalier avec un choix de menus par colonne.

L'utilisation de ce dispositif, en armoire ou en chariot roulant, convient plus particulièrement au milieu hospitalier, et également dans les "Fast food" ou en "Self service", comme déjà cité ci-dessus et dans lesquels les dispositifs équipés de : monnayeur électronique, ou code barre à lecteur lazer ou encore carte bancaire etc... deviennent complètement autonome.

Sur les dessins annexés donnés à titre d'exemples non limitatifs des formes de réalisation de l'invention :

Les figures 1 et 2 représentent une coupe de face transversale du dispositif, et comportent un des moyens d'élévation des plateaux à un stade différent.

La figure 3 représente une coupe de face du dispositif avec les vis sans fin pour l'élévation des plateaux.

Sur la figure 4, le dispositif est représenté en coupe, vu de côté et comportant deux colonnes de plateaux, avec le déplacement transversal du module thermique d'une colonne à l'autre.

La figure 5, montre en A, B, C et D, le détail vu de coupe de l'ensemble du mécanisme permettant l'ouverture et fermeture du module thermique ainsi que l'introduction et l'évacuation du plateau.

La figure 6 représente une vue schématique du dessus du plateau, avec l'emplacement des vis sans fin.

La figure 7 représente le dispositif en double capacité une supérieure, l'autre inférieure.

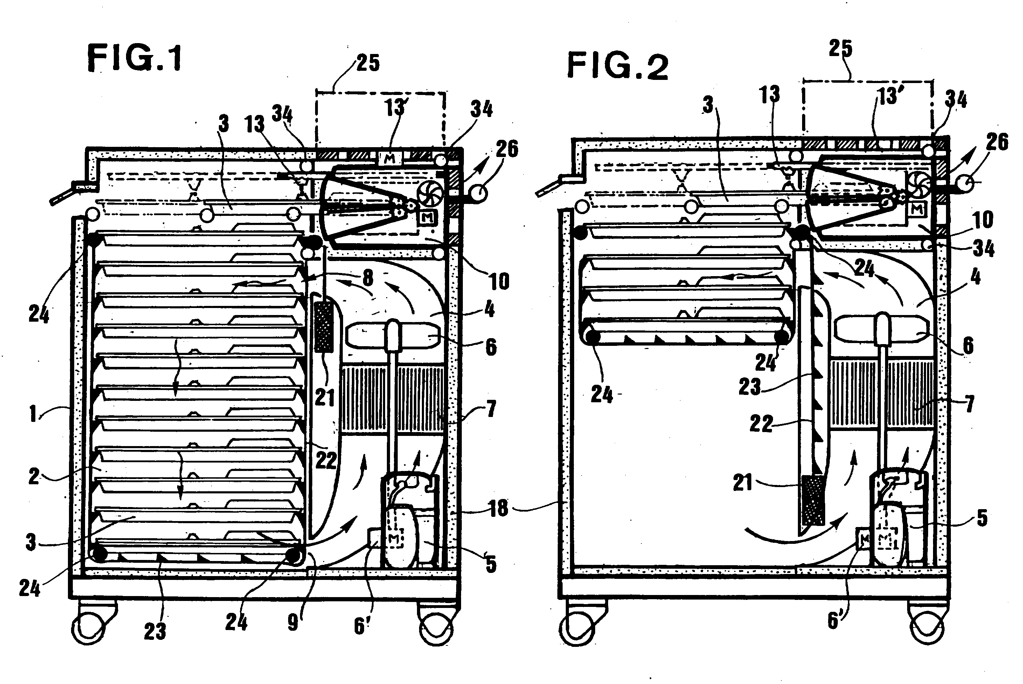

Sur les figures 1 et 2, le dispositif 1 comporte une zone réfrigérée 2 en permanence, contenant les plateaux gerbés 3 ainsi qu'une zone 4 de production des frigories comportant le compresseur 5 la turbine 6 motorisée 6' et l'évaporateur 7.

Deux bouches, supérieure 8 et inférieure 9, laissent le passage au flux d'air réfrigérant. Un plateau 3 est introduit dans le four 10. Sur cette figure la crémaillère 13 et son moteur 13' sont situés sur le module thermique 10. Sur ces figures 1 et 2, le système d'élévation des plateaux 3, est montré ici par le système de contre-poids 21. La figure 1 comporte le contre-poids 21 qui est rehaussé, il n'entraîne pas la courroie crantée 22 avec ses taquets qui maintiennent les plateaux 3. Des poulies 24 permettent à la courroie crantée 22 ainsi qu'au contre-poids 21, le mouvement de montée des plateaux.

Sur la figure 2, le contre-poids 21, se trouve presque totalement descendu, entraînant avec lui la courroie crantée 22 et ses taquets 23, qui ainsi ont permis de remonter les plateaux 3 au fur et à mesure de leur utilisation.

Sur ces 2 figures les pointillés 25 représentent le module thermique 10 qui serait monté sur la partie supérieure du dispositif, la poignée 26, permet le déplacement manuel et transversal du module thermique 10, aidé par les guides coulisseaux 34, pour desservir éventuellement une double colonne réfrigérée et les plateaux

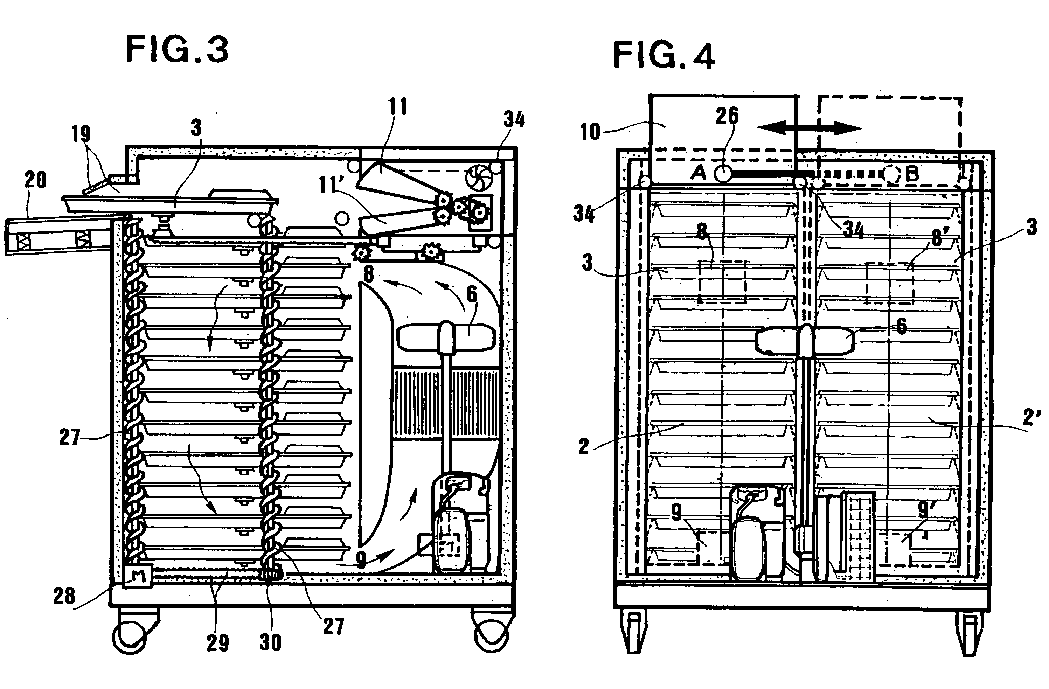

Le dispositif de la figure 3, est montré ici avec les vis sans fin 27 dont une est motorisée 28 entraînant la seconde par une chaîne 29 autour d'une poulie crantée 30. Les mâchoires 11 et 11' sont entraînant la seconde par une chaîne 29 autour d'une poulie crantée 30. Les mâchoires 11 et 11' sont ouvertes ayant libéré le plateau 3 qui est évacué après sa remise en température vers la sortie 19 sur une desserte extérieure 20.

La figure 4, vue de côté, comporte deux zones réfrigérées 2 et 2', comportant chacune un gerbage de plateaux 3, le module thermique 10 est montré ici sur la partie supérieure, avec la poignée 26 qui permet la translation horizontale du module thermique 10, aidé par les guides coulisseaux 34.

La turbine 6 envoie l'air réfrigéré par les bouches 8, 8' et 9, 9'.

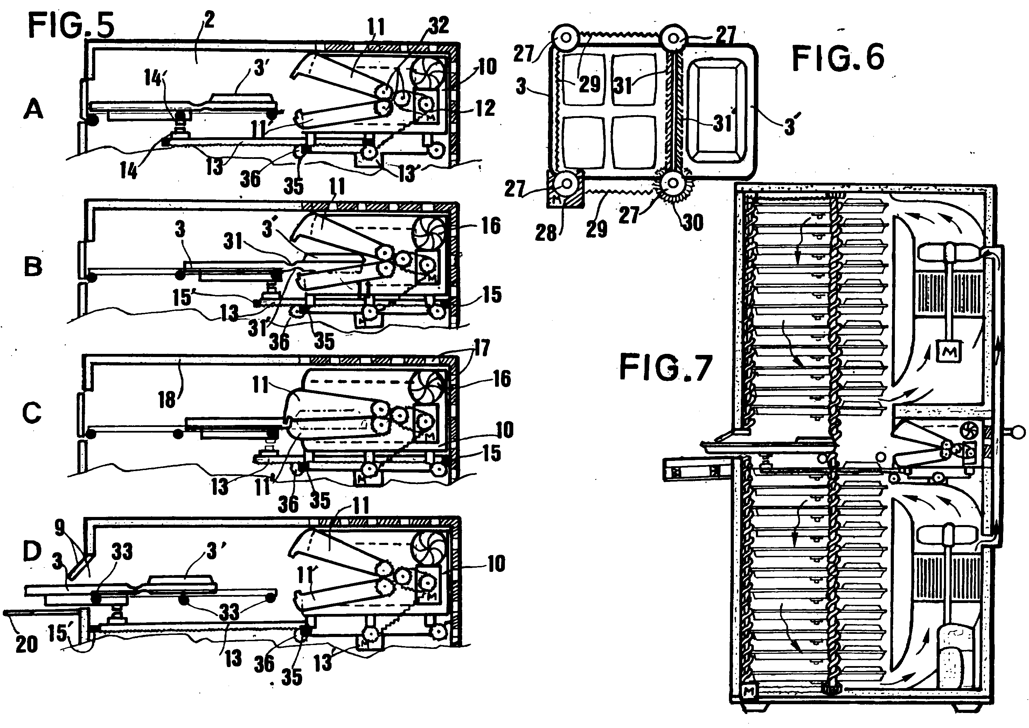

Sur la figure 5, - en A, le plateau 3 est en attente de chauffe dans l'enceinte réfrigérée 2.

Le module thermique 10 comporte les mâchoires 11 et 11' ayant chacune à leur extrémité des pignons d'entraînement 32 qui sont actionnés par le moteur 12. Les mâchoires sont ouvertes, en attente de recevoir la partie 3' du plateau devant être chauffé.

La crémaillère 13 actionnée par son moteur 13' vient contacter par son électro-aimant 14, la pièce métallique 14' du plateau. Le micro-contact 35 de la roulette à cames 36 détermine le passage du courant électrique pour l'ouverture ou fermeture de l'électro-aimant 14, ainsi que des butées de sécurité 15 et 15' situées aux extrémités de la crémaillère 13. Le tout étant synchronisé avec l'ouverture et la fermeture des mâchoires 11 et 11'.
- en B, la crémaillère 13 est retirée à fond, faisant pénétrer la partie 3' du plateau entre les mâchoires ouvertes 11 et 11' prêtes à être refermées sur les encoches 31 et 31' sur et sous le plateau.

La partie 3 du plateau reste toujours en zone réfrigérée 2. La butée 15 de la crémaillère 13 permet de mobiliser cette dernière en bout de course et est synchronisée avec la fermeture des mâchoires dans le module thermique 10. La butée 15' limitera également le bout de course opposé de la crémaillère, lors de la sortie extérieure du plateau.
- En C, la crémaillère 13 est toujours retirée en synchronisation avec les mâchoires 11 et 11' qui sont maintenant refermées et crochetées, la partie 3' du plateau est ainsi en cours de remise en température dans le module thermique 10. La turbine 16 permet l'évacuation des calories produites par le module thermique 10 à travers les grilles 17 situées dans les parois fortement isolées 18 du dispositif.
- En D la partie 3' du plateau étant réchauffée, les mâchoires 11, 11' s'ouvrent, commandées par la butée 15, le micro-contact et la crémaillère 13 qui a repris le chemin inverse jusqu'à la butée 15' de son autre bout de course, conduisant le plateau 3 vers la sortie afin que les produits contenus soient consommés.

Des billes latérales de guidage 33, maintiennent et facilitent le guidage et le glissement du plateau 3 qui est évacué après sa remise en température par la sortie et son volet 19 sur une desserte extérieure 20.

Le plateau 3 de la figure 6 est vu de dessus. Les encoches 31 et 31' déterminent la fermeture par les mâchoires de la zone 3' comportant le plat destiné à être réchauffé.

Les quatre vis sans fin 27 maintiennent le plateau à l'horizontale et permettent son élévation au moyen du moteur 28, de la courroie 29 et des poulies crantées 30.

Toutefois, les formes, les dimensions, les dispositions ainsi que les moyens mis en oeuvre pour la réalisation du dispositif qui vient d'être décrit, pourront varier dans la limite des revendications.

C'est ainsi que le dispositif qui vient d'être décrit montre un exemple non limitatif, où les plateaux sont élevés en hauteur, de bas en haut, jusqu'au niveau du module thermique.

Mais le dispositif peut également être envisagé avec des plateaux qui seraient gerbés en hauteur, au-dessus du module thermique et dont l'avancée pour leur remise en température se ferait inversement, de haut en bas, sans pour cela changer les caractéristiques techniques qui viennent d'être décrites. Le module thermique se trouverait tout simplement en bas et la fonction des vis sans fin serait inversée.

Une autre conception serait également de construire deux enceintes réfrigérées, l'une distribuant les plateaux de bas en haut et l'autre de haut en bas, tout en conservant entre les deux, un seul module thermique qui serait à la bonne hauteur pour le consommateur, ainsi qu'un seul groupe à compresseur de froid. L'avantage est de pouvoir stocker et distribuer un plus grand nombre de plateaux, les caractéristiques techniques ci-dessus décrites restent également inchangées.

Ces derniers exemples seraient plus particulièrement adaptés à des armoires fixes.

## Revendications

1. Dispositif de réfrigération et de remise en température avec distribution de plateau-repas, avec système d'introduction et d'évacuation des plateaux (3) et système de fermeture du module thermique (10) ou four, de préférence à micro-ondes, comportant une crémaillère (13) motorisée (13'), disposée sur ou sous le module thermique (10) et apte à coulisser et à saisir le dernier plateau (3) de la pile stockée dans l'enceinte réfrigérée (2) pour l'entraîner et l'introduire dans ledit module thermique,
caractérisé en ce que la crémaillère (13) comporte un électro-aimant (14) lui permettant de contacter une pièce métallique (14') située sous le plateau (3) pour le translater vers sa remise en température ou pour son évacuation hors du dispositif (1), l'ouverture ou la fermeture de cet électro-aimant (14) étant déterminée par un micro-contact (35) placé sur une roulette à came (36), le module thermique (10) comportant deux mâchoires supérieure (11) et inférieure (11') pourvues de pignons d'entraînement (32) et d'un moteur (12) commandé par l'ensemble crémaillère (13), micro-contact (35) et butée (15) qui par contact permettent, de façon synchronisée, la fermeture ou l'ouverture des mâchoires (11, 11') sur des encoches adéquates (31 et 31') prévues sur et sous le plateau, la position de ces encoches déterminant la partie du plateau devant être chauffée.

2. Dispositif selon la revendication 1,
caractérisé en ce que le relevage de la pile de plateaux de l'enceinte réfrigérée (2) est synchronisé avec la sortie du plateau (3), et est piloté par l'ensemble crémaillère (13), micro-contact (35) et notamment par la butée (15') de sortie du plateau.

3. Dispositif selon la revendication 2,
caractérisé en ce que le relevage de la pile de plateaux est effectué au moyen de vis sans fin (27) dont les filets supportent chaque plateau (3), lesdites vis sans fin étant actionnées par un moteur (28) auquel elles sont reliées par une chaîne (29) autour d'une poulie dentée (30).

4. Dispositif selon la revendication 2,
caractérisé en ce que le relevage de la pile de plateaux est effectué au moyen d'un contrepoids (21) entraînant, à chaque sortie de plateau, une courroie crantée (22) comportant des taquets (23) de soutien des plateaux (3).

5. Dispositif selon la revendication 1,
caractérisé en ce que le module thermique (10) peut desservir deux colonnes (2, 2') ou plusieurs colonnes de plateaux (3) en attente réfrigérée, une poignée (26), ainsi que des guides coulisseaux (34) situés aux quatre angles du module thermique (10), permettant de translater, manuellement ou bien de façon motorisée, le module thermique (10) d'une colonne (2) à l'autre (2'), ou inversement.

## Patentansprüche

1. Vorrichtung zum Kühlen und Aufwärmen mit Ausgabe von Imbißtabletts, mit Einführ- und Ausstoßsystem der Tabletts (3) und Verschlußsystem des Wärmemoduls (10) bzw. Ofens, vorzugsweise eines Mikrowellenofens, eine Zahnstange (13) mit Motor (13') aufweisend, welche auf oder unter dem Wärmemodul (10) angebracht und geeignet ist, zu gleiten und das oberste Tablett (3) des in dem gekühlten Bereich (2) gelagerten Stapels zu ergreifen, um es mitzunehmen und in das besagte Wärmemodul einzuführen,
dadurch gekennzeichnet, daß die Zahnstange (13) mit einem Elektromagneten (14) versehen ist, der ihr ermöglicht, mit einem unter dem Tablett (3) befindlichen Metallteil (14') in Kontakt zu kommen, um dieses Tablett zu seinem Aufwärmebereich oder zum Ausstoß aus der Vorrichtung (1) zu verschieben, wobei das Öffnen bzw. Schließen dieses Elektromagnets (14) durch einen auf einer Nockenrolle (36) angebrachten Mikrokontakt (35) bestimmt wird, das Wärmemodul (10) jeweils eine obere (11) und untere (11') Klemmbacke aufweist, die mit Mitnehmerritzeln und einem durch die Zahnstangeneinheit (13), den Mikrokontakt (35) und den Anschlag (15) gesteuerten Motor (12) versehen sind, und durch Kontakt das Schließen bzw. öffnen der Klemmbacken (11, 11') in synchronisierter Weise auf zweckmäßig unten und oben an den Tabletten vorgesehenen Aussparungen (31 und 31') ermöglicht, und die Position dieser Aussparungen den zu wärmenden Teil des Tabletts bestimmt.

2. Vorrichtung gemäß Anspruch 1, dadurch gekennzeichnet, daß der Anhub des Tablettenstapels in dem gekühlten Bereich (2) mit dem Austritt des Tabletts (3) synchronisiert ist und von der Zahnstangeneinheit (13), dem Mikrokontakt (35) und insbesondere von dem Tablettenausgabe-Anschlag (15') gesteuert wird.

3. Vorrichtung gemäß Anspruch 2, dadurch gekennzeichnet, daß der Anhub des Tablettenstapels mittels Förderschnecken (27) erfolgt, deren Gewinde die einzelnen Tabletts (3) tragen, wobei die besagten Förderschnecken durch einen Motor (28) angetrieben werden, mit dem sie durch eine Kette (29) um eine Zahnscheibe (30) verbunden sind.

4. Vorrichtung gemäß Anspruch 2, dadurch gekennzeichnet, daß der Anhub des Tablettenstapels mittels eines Gegengewichts (21) erfolgt, welches bei jedem Tablettaustritt einen mit Nasen (23) zur Stützung der Tabletts (3) versehenen Zahnriemen (22) bewegt.

5. Vorrichtung gemäß Anspruch 1, dadurch gekennzeichnet, daß das Wärmemodul (10) zwei Stapel (2, 2') oder mehrere Stapel von Tabletts (3) in gekühlter Lagerung versorgen kann, wobei ein Griff (26) sowie Gleitführungen (34) an den vier Ecken des Wärmemoduls (10) die Verschiebung von Hand oder auf motorisierte Weise des Wärmemoduls (10) von einem Stapel (2) zum andern (2') oder umgekehrt ermöglichen.

## Claims

1. Device for chilling and heating with distribution of food trays, with a system for inserting and removing the trays (3) and a system for closing the heating module (10) or oven, preferably micro-wave, comprising a motor-driven (13') rack (13), arranged on or below the heating module (10) and capable of sliding and seizing the last tray (3) from a pile stored in the chilling containment (2) in order to drive it and introduce it into the said heating module,
characterized in that the rack (13) has an electro-magnet (14) enabling it to enter into contact with a metal part (14') placed below the tray (3) to move it in translation towards its place of heating or to evacuate it outside the system (1), opening and closure of this electro-magnet (14) being activated by a micro-contact (35) positioned on a cam wheel (36), the heating module (10) comprising two upper (11) and lower (11') jaws equipped with drive pinions (32) and a motor (12) controlled by the rack (13), micro-contact (35) and stop (15) which by contact enable synchronized closure or opening of the jaws (11, 11') on the appropriate slots (31 and 31') provided on and below the tray, the position of these slots determining the part of the tray which has to be heated.

2. Device as per claim 1, characterized in that the lifting of the pile of trays in the chilled containment (2) is synchronized to removal of the tray (3), and is piloted by all the rack (13), micro-contact (35), and especially stop (15') assembly for tray removal.

3. Device as per claim 2, characterized in that the lifting of the pile of trays takes place using a worm screw (27) whose threads support each tray (3), the said worm screw being operated by a motor (28) to which they are connected by a chain (29) passing around a toothed pulley wheel (30).

4. Device as per claim 2, characterized in that the pile of trays are lifted by a counterweight (21) driving, at the tray exit, a notched belt (22) equipped with brackets, (23) supporting the trays (3).

5. Device as per claim 1, characterized in that the heating module (10) can supply two columns (2, 2') or several columns of trays (3) pending chilling, a handle (26), and sliding guides (34) situated at the four angles of the heating module (10), allowing manual or motor-driven movement in translation of the heating module (10) from one column (2) to the other (2'), or inversely.
